# EUROPEAN PATENT APPLICATION

(11) **EP 4 672 715 A1**
(43) Date of publication of application: **31.12.2025**
(21) Application number: 25185013.7
(22) Date of filing: 24.06.2025
(51) Int. Cl.: H04L 67/02, H04L 41/16, H04L 69/22

(54) **METHOD AND APPARATUS FOR DETERMINING A DEVICE CATEGORY OF A NETWORK DEVICE**

(30) Priority: 25.06.2024 NL 2038052
(71) Applicant: Modat B.V., 2595 AN 's-Gravenhage (NL)
(72) Inventor: El Yadmani, Soufian, 2595 BX Den Haag (NL)
(74) Representative: Nederlandsch Octrooibureau

(57) **Abstract**

The present disclosure provides a method for identifying a device category of a network device. The method includes sending an HTTP and/or HTTPS request (41) to the network device, receiving a response (43) from the network device including response data consisting of a response status code and response headers (44), generating a vector embedding (45) from the response data (51) using a machine learning model, and identifying a device category (48) based on the vector embedding and further vector embeddings in a first data set (47). The identifying comprises identifying a cluster of network devices (46) in the first data set based on the vector embedding, and retrieving a device category of the identified cluster as the device category of the network device.

## Description

### Field of the invention

The present application generally relates to a method and apparatus for identifying the device category of a network device, and more particularly to techniques for accurately determining and verifying the unique characteristics of network devices for security and authentication purposes. Related domains include transmission of digital information, e.g. telegraphic communication, graphical data reading, presentation of data, record carriers, handling record carriers and electric digital data processing.

### Background of the invention

The state of the art in assigning a device category to network devices involves various methods that typically rely on analysing network traffic, inspecting device characteristics, and applying machine learning techniques to categorize devices based on their behaviour or signature profiles. These methods are used in network security, management, and optimization, as they help in identifying the type of devices connected to a network, which can range from routers and switches to loT devices and servers.

Traditionally, device categorization has been performed using methods such as deep packet inspection (DPI), where the contents of network packets are analysed in detail to determine the device type. This approach, while thorough, requires significant processing power and bandwidth, and raises privacy concerns due to the inspection of packet contents. Other common methods include analysing MAC addresses or device IDs, which can be spoofed or obfuscated, and relying on static databases of device signatures, which can quickly become outdated as new devices enter the market.

A major drawback of existing methods is their complexity and the time-consuming nature of the analysis required. Deep packet inspection, for example, involves analysing large volumes of data in real-time, which can lead to delays and bottlenecks in network performance. Similarly, maintaining and updating databases of device signatures requires continuous effort and resources. These methods, while effective in many scenarios, do not scale well with the increasing number and diversity of devices on modern networks.

Darwinkel et al., in "Fingerprinting web servers through Transformer-encoded HTTP response headers" [arXiv:2404.00056, 2023], discloses a method for using machine learning techniques to fingerprint web servers based on HTTP response data. Their approach focuses on classifying a limited set of popular web server types like Apache and nginx using status codes and Server headers. They employ a transformer-based model to encode HTTP response status lines and generate vector embeddings, which are then used for classification.

Darwinkel's dataset appears to be restricted to a small number of common web server types rather than encompassing the broader range of network devices and products that may run HTTP services. Additionally, their technique relies heavily on the presence of Server headers, which may not always be available or may be intentionally obfuscated.

Dang et al., in "Research on machine learning-based device fingerprint recognition technology for power internet of things" [J. Phys.: Conf. Ser. 2781 012024, 2024], discloses a method for identifying and categorizing loT devices using machine learning techniques. Their approach involves extracting features from web homepages of devices and generating feature vector fingerprints. They utilize a random forest algorithm to classify loT devices based on these fingerprints.

However, Dang's approach also has limitations. Their dataset appears to be primarily focused on IoT devices in power systems, which may not fully represent the diverse range of network devices and services found across the broader internet. Additionally, their method relies on the availability of web interfaces for devices, which may not always be present or accessible for all network-connected devices.

Given these challenges, there is a clear need for a faster and more efficient approach to device categorization that still delivers comparable quality. While Darwinkel's approach is limited to web server classification and Dang's method relies on web homepages with potential limitations in scope, an ideal method would reduce the reliance on intensive data analysis, manual updates, and device-specific web interfaces. Instead, it would leverage advanced machine learning techniques to dynamically categorize a broader range of network devices based on minimal and non-intrusive data inputs, specifically focusing on response headers and status codes rather than content analysis or device-specific features.

### Summary of the invention

The present disclosure addresses these needs by introducing a method that utilizes machine learning models to generate vector embeddings from network device response data, specifically focusing on response headers and status codes rather than the content of the data packets themselves. This approach simplifies the data collection and analysis process, significantly reducing the time and resources required to categorize devices. By focusing on response data and employing sophisticated machine learning algorithms, the method can quickly and accurately identify device categories without the need for deep packet inspection or extensive signature databases.

This innovative approach not only streamlines the process of device categorization but also enhances the scalability and adaptability of network management systems to handle the growing diversity and volume of devices in modern networks. The use of machine learning ensures that the categorization process can continuously improve and adapt over time, providing a sustainable and efficient solution to the challenges of device categorization in large-scale network environments.

The application provides solutions for generating vector embeddings from response data using a machine learning model, identifying device categories based on these embeddings and further vector embeddings in a first data set, and assigning device categories to clusters of network devices. The application also addresses the problem of filtering response headers to remove or replace dynamic data, assigning composite device categories for network devices within the same cluster but with different labels, and cross-linking device identifiers with corresponding device categories. Additionally, the application solves the problem of scanning network devices multiple times from different geo-locations to create a comprehensive first data set.

There is disclosed a method for identifying a device category of a network device, the method comprising:
- sending an HTTP and/or HTTPS request to the network device;
- receiving a response from the network device, the response including response data, the response data consisting of a response status code and response headers;
- generating a vector embedding from the response data using a machine learning model; and
- identifying a device category based on the vector embedding and further vector embeddings in a first data set.

Utilizing a machine learning model to generate vector embeddings from response data ensures a sophisticated and adaptive approach to device categorization, capable of handling complex and varied network behaviours.

By focusing on response data consisting of a status code and headers, the method simplifies the categorization process, reducing the need for deep packet inspection and potentially increasing the speed and efficiency of identification. The applicant surprisingly found that such deep packet inspection is not needed at all, and that the status code and headers provide all information that is needed for establishing a good device category (with "device category" is meant a label identifying the type of machine that generated the response).

By utilizing a machine learning model to generate vector embeddings from response data, efficient identification of device categories of network devices is made possible.

In a development, the method further comprises identifying a device category based on the vector embedding and further vector embeddings in a first data set comprising identifying a cluster of network devices in the first data set based on the vector embedding, and retrieving a device category of the identified cluster as the device category of the network device.

Identifying clusters of network devices based on vector embeddings enables the method to categorize devices with similar characteristics, simplifying the management and monitoring of network infrastructure.

Retrieving a device category from an identified cluster allows for the leveraging of collective device behaviour, which can improve the accuracy of the categorization process for individual devices.

Cluster-based identification can enhance network analytics by providing insights into the grouping of devices, which can be useful for network optimization and troubleshooting.

The cluster-based approach offers several advantages over existing methods for device categorization. By analyzing the structure of response headers rather than relying on specific fields, this method can identify and categorize a much broader range of devices, including various products from different vendors such as routers, virtualization platforms, malicious infrastructures such as command and control centers, and other network-connected devices. This approach is not limited to traditional web servers and can effectively categorize devices even when common identifying headers are absent or intentionally obscured because of it's more behaviour and structure oriented approach.

Furthermore, the comprehensive nature of the dataset, which includes scans of the entire internet across all ports running HTTP protocols, provides a more robust and representative sample for analysis. This extensive dataset allows for the identification of patterns and similarities across a diverse range of devices and infrastructures, leading to more accurate and nuanced categorization. In an embodiment, the dataset is updated on a regular, e.g. hourly, daily or weekly, basis so the training is more accurate and up to date with any chances that might happen due to versioning, changes by owners and or new devices.

The clustering technique enables the grouping of similar devices based on their response header structures, which can reveal insights about shared characteristics among different products or vendors. This approach is particularly powerful for identifying similar infrastructures, whether they are legitimate products from specific vendors or potentially malicious setups. By focusing on structural similarities rather than explicit identifiers, the method can adapt to new or unknown device types without requiring constant updates to a signature database.

Additionally, this clustering approach enhances scalability and efficiency in device categorization. It can process and categorize large numbers of devices quickly, making it suitable for real-time network monitoring and security applications. The ability to identify similar devices and infrastructures without relying on specific header fields also makes this method more resilient to evasion techniques that might be employed by malicious actors attempting to disguise their presence on a network.

In a development, the method further comprises identifying a device category based on the vector embedding and further vector embeddings in a first data set comprises identifying, in the first data set, vector embeddings with assigned device category and calculating a distance between the generated vector embeddings and each of the identified vector embeddings.

The inclusion of a distance calculation between vector embeddings allows for a precise comparison of network device characteristics, leading to more accurate device category identification.

By comparing generated vector embeddings with those in a pre-existing dataset, the method can quickly associate new devices with known device categories, streamlining the identification process.

The ability to calculate distances between vector embeddings provides a natural similarity metric and facilitates the detection of slight variations in network device behaviour.

In a development, the method further comprises identifying a cluster of network devices in the first data set based on the vector embedding comprising calculating a distance between the vector embedding and a plurality of points in a plurality of clusters.

Calculating distances between a vector embedding and multiple cluster points allows for a nuanced assessment of a device's similarity to various device groups, leading to more precise clustering. This approach to clustering can adapt to the dynamic nature of network environments, as it can continuously refine clusters based on the evolving landscape of network device behaviour, including the appearance of new network device versions with slightly different responses.

In a development, the method further comprises a distance being calculated using a distance metric such as cosine similarity. The use of cosine similarity as a distance metric provides an effective means of measuring the orientation of vector embeddings in high-dimensional space, which is particularly useful for identifying similarities in device behaviour. Cosine similarity is computationally efficient for high-dimensional data, which can result in faster processing times and lower resource consumption when analyzing network device device categories.

By employing a distance metric like cosine similarity, the method can effectively disregard the magnitude of vector embeddings, focusing instead on the directionality, which is often more relevant for pattern recognition and classification tasks in network security.

In a development, the method further comprises a machine learning model being a neural network model that utilizes a tokenizer stage and a positional embedding stage to generate the vector embedding.

The utilization of a tokenizer stage and a positional embedding stage in the neural network model enhances the model's ability to understand and process natural language by capturing the sequential nature of the input data, which is for example traditionally used for tasks such as language translation, sentiment analysis, and text summarization. The applicant has surprisingly found that the parsing of response headers can be very efficiently and effectively done using such an embedding stage.

By generating vector embeddings, the neural network model can effectively convert textual information into numerical form, facilitating the handling of large datasets and improving the efficiency of the machine learning process.

In a development, the method further comprises a machine learning model being a transformer-based neural network model.

The adoption of a transformer-based neural network model allows for parallel processing of sequences, significantly reducing training times compared to traditional sequential models and enabling the handling of long-range dependencies within the data.

Transformer-based models have been shown to achieve state-of-the-art performance on a variety of complex tasks, such as question answering and language understanding, due to their self-attention mechanisms that provide a more nuanced understanding of context. It was not known that such transformer models can also be effectively leveraged for the present task.

In a development, the method further comprises a tokenizer and embedding stage being based on the RoBERTa or DeBERTa architecture.

These architectures have been pre-trained on vast amounts of data, which allows for transfer learning, where the model can be optionally fine-tuned with a smaller dataset to achieve high performance on specific tasks, thus saving computational resources and time.

In a development, the method further comprises, if a response header includes a timestamp, the filtering the response headers including one of deleting the timestamp, replacing the timestamp with a fixed expression, and replacing the timestamp with a corresponding data format string.

Filtering response headers to remove or replace dynamic data such as timestamps, cookies, or anything related to an (open) session, ensures consistency in the data set, which is crucial for maintaining the integrity of the machine learning model and avoiding biases due to temporal variations.

By standardizing the response headers, the method reduces the dimensionality of the data, which can lead to faster processing times and less complex models without compromising the quality of the categorization process. The status code may reflect a state of the product, if the status code is 200 for example it might have a first set of headers and if it has status code 404, it might have a second, different set of headers. One product can thus have multiple states each with a different set of headers. It is therefore advantageous to jointly encode the status code and the response headers into the embeddings vector.

There is disclosed a method for creating a first data set for identifying a device category of a network device, the method comprising, for each network device of a plurality of network devices:
- sending a plurality, preferably two, of HTTP and/or HTTPS requests to the network device;
- receiving a plurality of response data from the network device, each response datum consisting of a response status and response headers;
- filtering the response headers to remove or replace dynamic data in the response headers;
- generating a vector embedding from the filtered response headers using a machine learning model; and
- adding the vector embedding to the first data set,
- assigning a device category to the vector embedding;

In an embodiment, the vector embedding is stored with the status code in the first data set. In that case, the status code may be omitted in the embedding step. That is, the embedding can then be solely based on the response headers.

Sending a plurality of requests enables detecting and filtering of dynamic data. It is preferred to send two requests, in order to minimize the network load on assets, while still enabling filtering of dynamic data. In an embodiment, the requests are sent from a specific geo-location, such as a geo-location corresponding to the geo-location of the network device. In the disclosed method for identifying a device category of a network device, the implementation of sending multiple requests from different geo-locations can be achieved through various standard technologies. One approach involves using different requester modules, each configured to send requests from distinct geographic locations. Alternatively, a single requester module could be employed, with the capability to reroute one or more of the requests through proxy servers or VPN services located in different regions. This rerouting can be facilitated by technologies such as SOCKS or HTTP proxies, which allow the request to appear as if it is originating from a different location.

Preferably, two requests are used to minimize the load on network resources while still allowing for the necessary filtering of response headers. This dual-request strategy is sufficient to provide a comparative analysis of the responses, which enables identifying geo-location-based differences in the response data. By limiting the number of requests, the method remains efficient and less burdensome on the network infrastructure. In an embodiment, at least two requests are sent. In an embodiment, exactly two requests are sent.

The use of standard technologies such as HTTP redirection, DNS manipulation, or the use of Content Delivery Networks (CDNs) can also support the implementation of geo-distributed requesting. These technologies help in simulating requests from different locations without the need for multiple physical deployment sites for the requester modules.

When requests are made from different geo-locations, the method can thus utilize either multiple requester modules or a single module with rerouting capabilities to implement the sending of requests from various geo-locations. The use of two requests optimizes the balance between system load and the quality of data for device categorization.

In an embodiment, multiple (preferably two) requests for the network device are sent from the same geo-location, but the used geo-location is, for each scanned network device, dependent on the detected geo-location of said network device. In that manner, the scanned device will get a request from (seemingly) a device nearby (or at least in the same country). This prevents issues with network devices that are configured to only react with meaningful responses to requests from more or less the same geo-location as where the network devices themselves are. This also requires a requester module that is able to dynamically chose a geo-location from which the request seemingly originates.

The method enables the creation of a robust first data set by systematically collecting and processing response data from a variety of network devices, which can be used to accurately identify and differentiate between devices based on their unique device categories.

Assigning a device category to the vector embedding allows for quick and efficient identification of network devices, facilitating network management and potentially aiding in the detection of unauthorized or rogue devices on the network.

In a development, the method further comprises assigning a device category to the vector embedding comprising:
- identifying a plurality of clusters of network devices based on the respective vector embeddings of the first data set; and
- assigning a device category to one or more of the identified plurality of clusters of network devices.

The assignment of a device category to vector embeddings that represent clusters of network devices enhances the security and integrity of the network by enabling precise identification and tracking of device behaviours within the network.

By clustering network devices and assigning a unique device category, network administrators can more efficiently manage and monitor network traffic, leading to improved network performance and reduced risk of unauthorized access.

In a development, the method further comprises a clustering being performed using a K-means clustering algorithm.

Utilizing a K-means clustering algorithm for the clustering process provides a computationally efficient method for grouping similar network devices, which can be particularly beneficial for large-scale networks with numerous devices.

The K-means algorithm's simplicity and effectiveness in creating distinct clusters allow for straightforward implementation and maintenance, which can lead to reduced operational costs and complexity in managing network security.

Alternative clustering methods such as hierarchical clustering or DBSCAN could also be employed. The skilled person will have access to a toolset of suitable clustering algorithms.

It is possible to visualize the clusters by first bringing the dimensionality down to two or three dimensions, using e.g. t-SNE (t-Distributed Stochastic Neighbour Embedding), PCA (Principal Component Analysis) and UMAP (Uniform Manifold Approximation and Projection).

In a development, the method further comprises assigning the device category to a cluster comprising assigning a composite device category for network devices that fall within the same cluster but have different labels.

Assigning a composite device category to network devices within the same cluster but with different labels ensures a robust and nuanced security approach that can differentiate between devices with subtle variations in behaviour or characteristics.

This method of categorization of devices enhances the granularity of network monitoring, allowing for more targeted security measures and potentially reducing the incidence of false positives in threat detection.

In a development, the method further comprises assigning a device category comprising:
- providing a second data set comprising device identifiers and corresponding device categories;
- cross-linking a device identifier in the first data set with a device identifier in the second data set.

Providing a second data set with device identifiers and corresponding device categories enables cross-referencing and validation of device identities, which strengthens the overall security framework by ensuring consistency and accuracy in device identification.

In a development, the method further comprises a device identifier being an Internet Protocol, IP, address. Using an Internet Protocol (IP) address as a device identifier leverages a universally recognized and standardized system for identifying devices on a network, which simplifies integration with existing network infrastructure and protocols. Alternatively or additionally, the device identifier can include a domain name or a fully qualified domain name.

The use of IP addresses enables compatibility with a wide range of network devices and services, ensuring that the method can be applied broadly across different network environments and device types, enhancing its utility and applicability.

In a development, the method further comprises a first data set being created by scanning network devices on the internet multiple times, preferably exactly two times, from different geo-locations. Scanning multiple times (i.e. at least two times) allows filtering of response headers in case they differ depending on geo-location or other factors. Scanning a network device exactly twice advantageously minimized the amount of scanning while still allowing filtering.

This enhances the accuracy of the network device identification process by incorporating data variability through multiple scans from different geographical locations, which can mitigate the effects of location-based anomalies.

Instead of scanning from multiple (e.g. two) different geolocations, the network device may be scanned multiple (e.g. two) times from the same geo-location, where the geo-location is dynamically chosen to match the network device in question. So, for scanning a network device in The Netherlands, a geo-location of a server in Amsterdam may be chosen, while for scanning a network device in France, a geo-location of a server in Paris, Lyon or Marseille may be chosen. In this case, multiple requests for the network device are sent from the same geo-location, but the used geo-location is, for each scanned network device, dependent on the detected geo-location of said network device.

It also increases the robustness of the data set against evasion techniques that rely on geo-location, as scanning from various locations can reveal discrepancies in network device behaviour or accessibility.

There is disclosed a system for identifying a device category of a network device, the system comprising:
- a scanner for sending an HTTP and/or HTTPS request to the network device and for receiving a response datum from the network device, the response datum consisting of a response status and response headers;
- a processing module configured to
- provide the response datum to a machine learning model, wherein the machine learning model is adapted to generate a vector embedding from the response datum using the machine learning model;
- identify a device category based on the vector embedding and further vector embeddings in a first data set.

The system provides a mechanism for network device identification by utilizing machine learning to analyze HTTP/HTTPS response data, leading to a more nuanced and precise categorization technique.

The system facilitates the rapid and automated identification of network devices by leveraging vector embeddings, which can be efficiently compared and analyzed, thus reducing the time and computational resources required for identification.

The system can be configured to implement any of the above described methods. Such a system offers a modular and scalable system architecture that can be enhanced with additional features from previous claims, allowing for customization and adaptation to specific use cases or technological advancements.

The disclosure also relates to a computer program product comprising program instructions, which, when executed on a system cause the system to execute the method as described above.

### Brief description of the Figures

Embodiments of the present invention will be described hereinafter, by way of example only, with reference to the accompanying drawings which are schematic in nature and therefore not necessarily drawn to scale. Furthermore, like reference signs in the drawings relate to like elements.

In the below figures:
- figure 1 schematically shows a method for identifying a device category of a network device;
- figure 2 schematically shows process flow for identifying and retrieving a device category;
- figure 3 schematically shows machine learning model stages;
- figure 4 schematically shows a method for identifying a device category of a network device;
- figure 5 schematically shows an example of filtering response headers;
- figure 6 schematically shows a method for creating a first data set for device category identification;
- figure 7 schematically shows data set structures for device category identification;
- figure 8 schematically shows a system for identifying a device category of a network device; and
- figure 9 shows example clusters of device categories.

### Detailed description

First a number of definitions will be given. A "method for identifying a device category of a network device" designates a method for identifying a device category or label of a networked device, such as a device connected to an Internet Protocol (IP) public or private network, such as an intranet or the internet. With device category is meant a label characterizing a device class or type. For example "Asus router" or "Cisco access point", "Apache server", "CobaltStrike", "Silver C2", "Brute Ratel C4". With "categorization" is meant the act of assigning a category to e.g. a device.

The term "machine learning model" may refer to a neural network model that utilizes a tokenizer stage and a positional embedding stage to generate the vector embedding.

As used herein, the term "tokenizer stage" refers to a neural network model that converts ASCII or otherwise encoded (textual) response data into tokens for a machine learning model. As used herein, the term "embedding stage" refers to a neural network stage that utilizes a positional embedding stage (i.e., a vector embedding stage) to generate vector representations from a series of tokens. In particular, the term "embedding stage" may refer to the embedding stage of a Large Language Model, LLM. The "vector embedding" will typically be a vector of floating point values, the vector typically having a relatively high dimension of e.g. 512, 768, 1024, or higher.

As used herein, the term "positional embedding stage" refers to a stage in neural network that utilizes a positional embedding algorithm to generate a vector embedding. With positional embedding is meant that the order of the tokens is somehow encoded into the vector embedding.

A "HTTPS request" designates an HTTP request that is sent over an HTTPS secured connection. The term "response" is used herein to refer to any form of communication between a user and a network device.

A "response including response headers" designates a response that includes response headers, and which is sent in response to an HTTP or HTTPS request. The term "filtered response headers" is used herein to refer to response headers where dynamic data (that is, that that will vary from response to response because it is time dependent or otherwise context dependent) has been removed. A "response datum" designates a response header, a response body, or a combination of response headers and response body. As used herein, the term "response status" refers to the status of a request received by a network device, e.g. 200 for a successful request. It is part of a response.

As used herein, the term "first data set" refers to a collection of vector embeddings with assigned device category (label). A "second data set" designates a data set that is used to lookup a device category of a network device, as a source of values for the first data set that is the main database.

As used herein, the term "device identifiers" may refer to any combination of identifiers that can be used to identify a device. It may in particular refer to an IP address, such as an IPv4 or IPv6 address.

As used herein, the term "distance metric" refers to a function that takes two vectors as input, and returns a distance between said two vectors. A "cosine similarity" designates the cosine of the angle between two vectors. It may be the inner product of the two vectors.

The term "neural network model" is used herein to refer to a machine learning model that utilizes a tokenizer stage and a positional embedding stage to generate vector embeddings.

A "different geo-location" designates a different physical location of the origin of the request to the network device. By using different geo-locations, a network device can be tested to see if it returns a response dependent on the geo-location where the requests (seemingly) originates.

As used herein, "a geo-location that corresponds to a geo-location of the network device" could indicate a geo-location that is in the same building floor, building, city, province, country, continent or any other geographical entity as the respective building floor, building, city, province, country, continent or any other geographical entity that the network device is in.

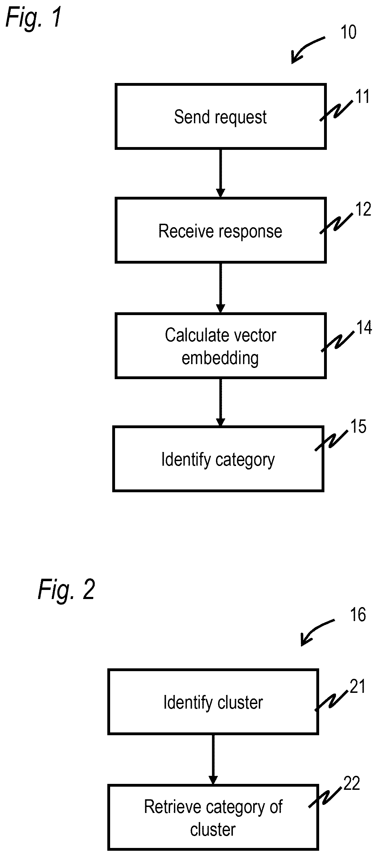

Figure 1 presents a flowchart outlining the steps of a method 10 for identifying a device category of a network device. It includes stages such as sending 11 a request, receiving 12 a response, calculating 14 a vector embedding, and identifying 15 a device category.

One way in which the device category may be identified is the following. A first data set 71 is provided which lists vector embeddings for a number N of network devices having a known device category/label. A distance metric (such as cosine similarity) is calculated between the current vector embedding (the vector embedding calculated for the as-yet-unknown network device that is being evaluated) and each of the N vector embeddings in the first data set, and the vector embedding(s) that are at the lowest distance(s) with the current vector embedding are taken as the vector embedding(s) of known devices to which the device is most similar.

The result may then be ranked according to increasing distance, so the closest vector embedding in the first data set and it's associated device category/label are top ranked, then the second closest vector embedding, etc. In an embodiment, only the top ranked result is returned.

Figure 2 provides an optional detail of a method 10 for identifying a device category, which is different from the approach using the first data set as described above. The detail comprises first identifying 21 a cluster to which a calculated vector embedding belongs. Then, in step 22, the device category of the identified cluster is retrieved as the device category of the network device. These steps can comprise looking up the cluster in another data set 72 which lists clusters and associated device categories/labels. Such looking up can comprise the calculation of distance metrics.

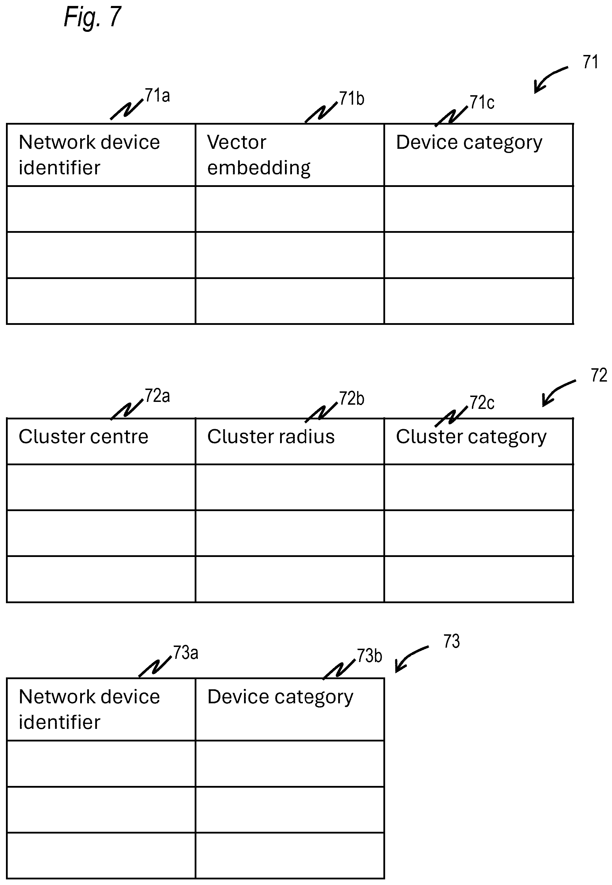

For example, in an embodiment a distance metric (such as cosine similarity) is calculated between the current vector embedding and the centre of each known cluster (as listed in e.g. data set 72 of figure 7). Then the cluster(s) whose centres are at the lowest distance(s) with the current vector embedding are taken as the cluster(s) to which the vector embedding belong(s). The result may be ranked according to increasing distance, so the closest cluster and it's associated device category/label are top ranked, then the second closest cluster, etc.

In an embodiment, the size or (multi-dimensional) radius or size of the cluster also plays a role. E.g. the distance to a cluster centre may be inversely proportionally weighted with a radius of the cluster, so that a moderate distance to a large cluster may be higher ranked than a somewhat smaller distance to a small cluster.

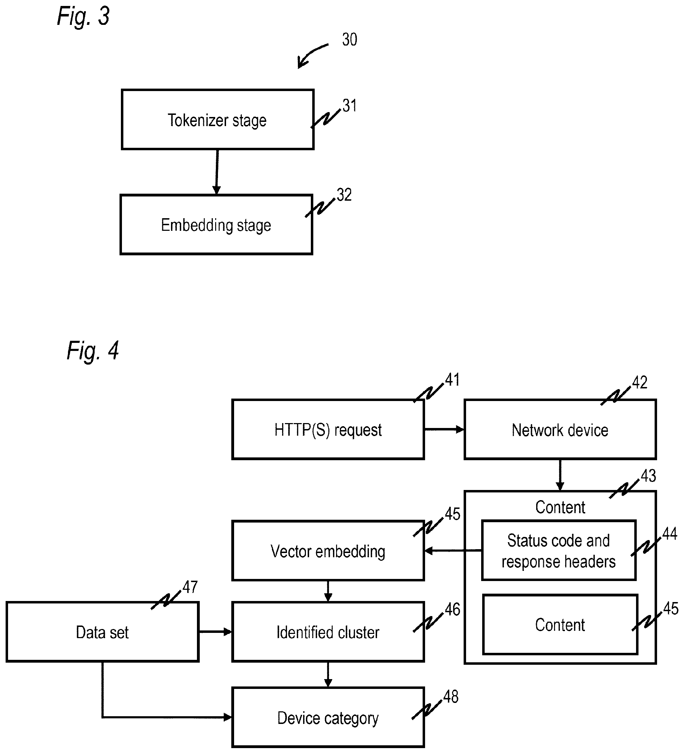

Figure 3 schematically shows a flowchart representing a component of the machine learning model which is part of the system for identifying a device category of a network device as described in the patent claims. This model 30 includes two primary stages: the tokenizer stage 31 and the embedding stage 32. In the tokenizer stage 31, input data is tokenized, meaning it is transformed into a series of tokens that the machine learning model can process. Tokens are typically smaller pieces, such as words, phrases, or other units of text, that are extracted from the input data.

Following tokenization, the process flows into the embedding stage 32. Here, the tokens are translated into numerical vectors, which are the format required for further processing by neural networks or other machine learning algorithms. Embedding converts discrete tokens into a continuous vector space where they can be analyzed and compared in a meaningful way. Preferably a positional embedding is used, meaning that the order of tokens is encoded in the embedding. The diagram does not provide additional detail about the inner workings of these stages or their specific implementations, but it does clarify their sequential relationship within part of the machine learning model referred to in the patent.

While these tokenization and embedding stages are known in the context of Large Language Models, the applicant has surprisingly found that they can also be effectively utilized for the classification of response data from network devices.

Figure 4 illustrates the data flows in a process of identifying a device category of a network device, including sending an HTTP request 41 to the network device, receiving a response datum 43 with response status and response headers 44, generating a vector embedding 45 based on the response status and headers 44. Optionally, a cluster 46 is identified to which the vector embedding belongs. A corresponding device category or label 48 is determined based on a first data set 47.

The diagram presents a sequential overview of interactions and processes in a method for identifying a device category of a network device. It begins with sending an HTTP request 41 to the network device. The network device, upon receiving the request, sends back a response that contains both the content 45 and a response datum 44 (the response datum consists of the response status code and the response headers). The content 45 is not used. The process further encompasses the generation of a vector embedding from the information received in the response datum 44. This vector embedding is then optionally used to identify a cluster 46 of related network devices within a larger data set 47. Finally, a device category 48 is retrieved or determined for the network device based on the identified cluster 46 within the data set 47 or based on the vector embedding and the data set 47.

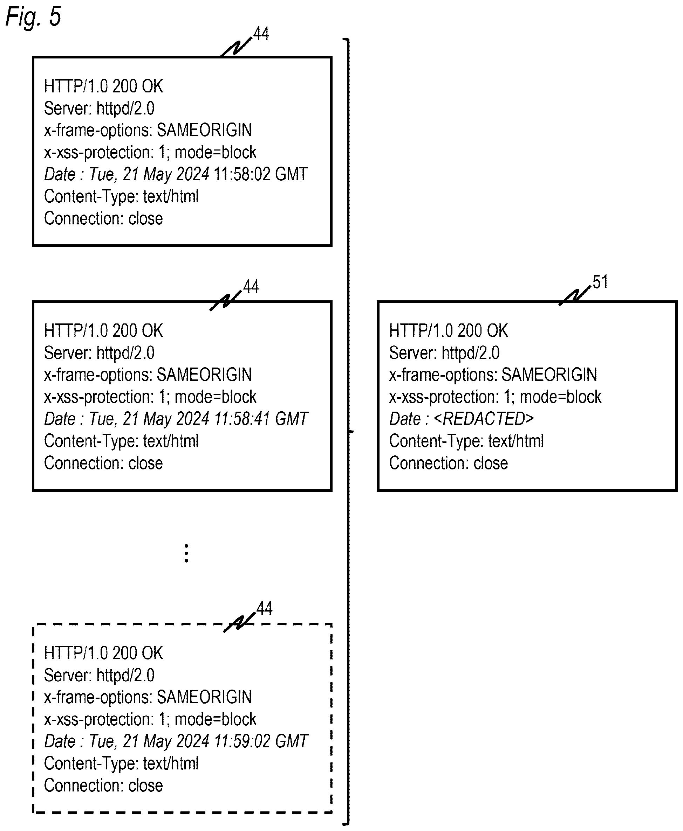

Figure 5 illustrates the process of filtering response headers to remove dynamic data, resulting in a filtered set of response headers for use in generating a vector embedding as part of a method for identifying a device category of a network device. In Figure 5, separate response headers 44, are shown on the left, going from top to bottom, a first one, a second one and an N-th one. While in principle any number N≥2 response headers can be used for filtering, it is advantageous to use N=2 response headers to avoid unneeded network load. As described elsewhere in this disclosure, each request may be (seemingly) made from a geo-location corresponding to the geo-location of the network device for which the request is intended.

Each of these N headers originates from an HTTP response, detailing the protocol version, server type, security options, date, content type, and connection status. Notably, the date in each response header is slightly different, indicating dynamic data that would vary with each request. On the right side of the figure, a single filtered set of response headers 51 is presented, which is the result of the filtering process where the date has been redacted to address this variability. The other header fields remain unchanged, showcasing how the method removes or replaces dynamic data to create a consistent representation for the machine learning model to generate a vector embedding. This contributes to the accuracy and repeatability of identifying the device category of the network device.

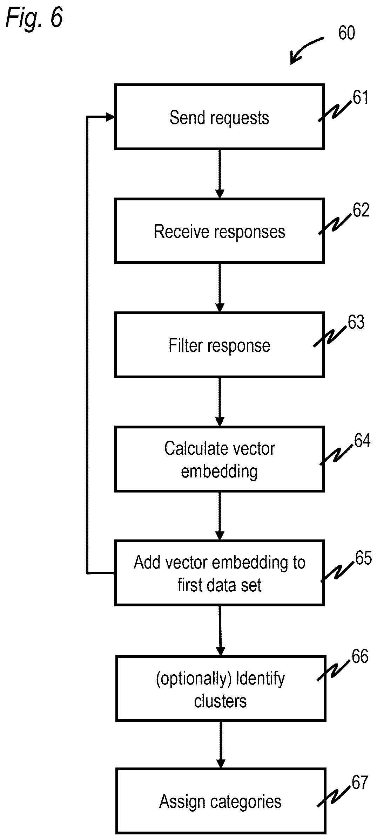

Figure 6 schematically illustrates the steps involved in a method for creating a first data set used in the process of identifying a device category of a network device. This involves sending requests 61, receiving responses 62, filtering responses 63, generating vector embeddings 64, adding them to a data set 65, optionally identifying clusters 66, and assigning device categories 67.

The diagram is a sequential flowchart outlining the stages of the method for categorizing a network device. It starts at the top with "Send requests" 61, indicating the initiation of HTTP and/or HTTPS requests to a target network device. Following this step, the method proceeds to "Receive responses" 62 , where the network device responds to the requests with response headers and a status code. The next step, "Filter response" 63, involves manipulating the received response data to remove or replace dynamic information that may not be useful for identifying a consistent device category, as illustrated in figure 5 described above. Once the response is filtered, the process moves to "Calculate vector embedding" 64, where a machine learning model is used to convert the filtered response data into a numerical vector representation-a vector embedding-that captures the characteristics of the network device's responses. After the vector embedding is generated, in step 65, it is added to a first data set, which is a collection of such embeddings for different network devices. Optionally, the method can include "Identify clusters" 66, a step where clusters of similar network devices are recognized based on their vector embeddings. This would typically be done using clustering algorithms to categorize devices with similar response behaviours. The final step in the flowchart is to "Assign device categories" 67, which establishes a device category for each vector embedding or cluster of devices, for identifying and differentiating network devices based on their internet communication signatures.

Figure 7 schematically presents three tables 71, 72, 73 that correspond to elements of a data set used for identifying a device category of a network device. The tables represent the data structures for network device identifiers with associated vector embeddings and device categories, optional clusters of network devices with centres and cluster device categories, and a second data set with network device identifiers and corresponding device categories.

The first table 71 includes columns labelled with reference numerals 71a, 71b, and 71c which correspond to network device identifiers, vector embeddings, and assigned cluster identifiers or device categories, respectively. This table represents a first data set, with the first column 71a identifying the network device, the second column 71b containing the respective vector embedding calculated from the response datum, and the third column 71c containing an assigned device category of the network device.

The second table 72 may be used in case the cluster variant is used. This table is structured with columns given reference numerals 72a, 72b, and 72c, which designate cluster centre 72a, cluster radius 72b, and cluster device categories 72c for clusters of network devices. The cluster centre 72a value will be the vector embedding of the centre of each cluster. The cluster radius is an optional parameter (a scalar or vector) indicating a size of the cluster. It can for example be a one-dimensional average radius, or a multi-dimensional radius. It can be a statistical quantity, such as a one or multi-dimensional standard deviation. It can for example be a one or multi-dimensional indication of a cluster boundary containing 50%, 70%, 80%, 90% or 95% of the cluster's points.

The third table 73 presents a simplified structure with just two columns, indicated by reference numerals 73a and 73b. These columns represent network device identifiers 73a and their associated device categories 73b within a second data set. This table may be used for cross-linking purposes, in order to fill columns 71c or 72c.Table 71 and optional table 72 may form the first data set, as indicated by the large bracket and numeral on the right. Table 73 may form the second data set.

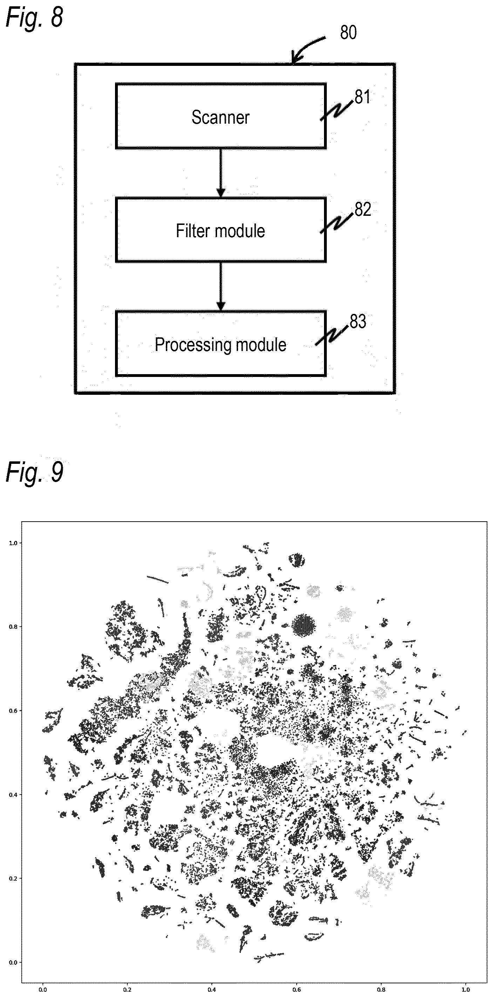

Figure 8 depicts a simplified block diagram representation of the system setup for the method of identifying a device category of a network device. The system, denoted by numeral 80, incorporates interconnected modules 81, 82, 83 that execute specific functions. The scanner 81 is responsible for initiating communication with the network device by sending an HTTP and/or HTTPS request and receiving the corresponding response that includes the response headers. The response acquired by the scanner is then passed on to the filter module 82, which is tasked with filtering the response headers to eliminate or substitute dynamic data that may be present. This module is used when the first data set is being assembled. For inference it is possible to omit module 82. The resulting (filtered or original) response headers are supplied to the processing module 83. The Processing Module utilizes a machine learning model to generate a vector embedding from the filtered response data, which is used in the subsequent identification of the device category of the network device.

Figure 9 illustrates a two-dimensional scatter plot generated from a dataset of network device vector embeddings. The plot visualizes the clustering of devices into distinct categories based on their response data characteristics. Each point on the plot represents a network device, and the proximity of points to each other indicates similarity in device characteristics as determined by the machine learning model's analysis of network response data.

The process of creating this plot involves several steps. Initially, the high-dimensional data, derived from the network device response headers and status codes, is clustered into a specified number of categories using the K-Means clustering algorithm. K-Means is a standard method for partitioning data into K distinct clusters by minimizing the variance within each cluster. The algorithm assigns each data point to the nearest cluster centre and recalculates the centre of each cluster until the positions of the centres stabilize. Alternative clustering methods, such as hierarchical clustering or DBSCAN, could also be employed depending on the specific requirements for granularity and the nature of the data distribution.

Following the clustering, the cluster labels assigned by the K-Means algorithm are retrieved to identify which cluster each device belongs to. Subsequently, the dimensionality of the data is reduced to two dimensions using the t-SNE (t-Distributed Stochastic Neighbour Embedding) technique. t-SNE is effective for visualizing high-dimensional datasets by converting similarities between data points into joint probabilities and minimizing the Kullback-Leibler divergence between the joint probabilities of the low-dimensional embedding and the high-dimensional data. Alternatives to t-SNE include PCA (Principal Component Analysis) and UMAP (Uniform Manifold Approximation and Projection), which might be preferred based on the dataset's size and the preservation of global versus local data structures.

After dimensionality reduction, a scaling function is defined to normalize the data, ensuring that the x and y coordinates of the plot fit within a standardized range of [0, 1]. This normalization is helps maintaining the integrity of the visual representation, allowing for more easy interpretation of the clusters.

The final plot, as shown in Figure 9, uses grayscale colours to differentiate between the clusters, with each colour representing a unique device category. This visualization aids in the intuitive understanding of the distribution and grouping of network devices based on their response data, providing insights into the characteristics that define each category.

The present invention relates to a method for efficiently categorizing devices connected to the internet that run a web server or at least respond to requests on standard HTTP or HTTPS ports. The invention utilizes an HTTP or HTTPS request and extracts the response status and response headers, while ignoring the content of the response. By focusing solely on the response headers, the invention enables quick and large-scale categorization of devices, eliminating the need for time-consuming retrieval and analysis of actual content from the scanned devices.

In the inference process, the invention involves disregarding response headers known to contain dynamic or session-related data during the training stage. From the remaining response headers, a machine learning model generates a vector of embeddings using techniques such as the RoBERTa or DeBERTa tokenizer and positional embedding stage. These embeddings are then compared to a labelled training set, which may optionally comprise clusters of vector embeddings, where each cluster has labelled device category data. By identifying the closest vectors or clusters, the most probable vector/cluster and its corresponding device category or label can be determined. In that way, the server can be characterized.

For training purposes, the invention involves systematically scanning devices on the internet and sending HTTP and/or HTTPS requests to each device. The response status code and response headers are saved in a database. Multiple scans of each device, preferably from different geo-locations, are conducted to filter out responses that vary among the scans. Non-reproducible data, such as timestamps or random keys, are removed or replaced with generic expressions. The filtered response data, consisting of the response status code and headers, is then used to calculate a positional embedding for each device.

In one embodiment, the response data of scanned devices are individually labelled, while in another embodiment, clusters are identified using standard clustering techniques. It is also possible to combine both approaches in a single embodiment. In that case, both clusters are identified while also a data set of individual devices is compiled. Such a system is able to produce a ranking of closest clusters (using e.g. the second data set 72) and a ranking of closest known devices (using e.g. the first data set 71).

The comprehensive nature of the dataset used in this method is achieved through systematic and extensive scanning of devices across the internet. This involves sending HTTP and/or HTTPS requests to a wide range of IP addresses and ports known to run HTTP protocols. The scanning process is not limited to well-known web server ports but extends to all possible ports that may host HTTP services. This approach ensures that the dataset captures a diverse array of devices and services, including traditional web servers, loT devices, network appliances, and potentially malicious setups. By scanning from multiple geo-locations, the method also accounts for regional variations in device configurations and responses. This comprehensive scanning strategy results in a rich dataset that represents the true diversity of internet-connected devices, enabling more accurate and robust device categorization.

The clustering technique employed in this method focuses on revealing underlying structures in the response data rather than relying on literal matches of specific fields. This approach is particularly effective in identifying similar infrastructures, even when traditional identifiers are absent or intentionally obfuscated. By analyzing the overall structure and patterns in response headers, the method can group devices with similar characteristics, regardless of whether they explicitly declare their identity. This structural analysis is resilient to common evasion techniques used by malicious actors, such as modifying or removing identifying headers. For example, two devices with different declared server types but similar header structures and behaviour patterns may be clustered together, potentially revealing a common underlying infrastructure or product. This ability to identify structural similarities rather than relying on easily manipulated explicit identifiers enhances the method's effectiveness in detecting both legitimate and potentially malicious device setups across the internet.

A first dataset is compiled, containing all embedding vectors and/or identified clusters. Assigning device categories or labels to devices or clusters can be done by utilizing a further dataset 73 of labelled devices that overlaps with the first dataset 71 or second data set 72. In the clustering approach, labels or device categories are assigned to each identified cluster. Clusters containing overlapping devices are labelled accordingly, and in cases where a cluster contains multiple different labels, further subdivision or a composite label comprising each of the different labels may be applied.

In the foregoing description of the figures, the invention has been described with reference to specific embodiments thereof. It will, however, be evident that various modifications and changes may be made thereto without departing from the scope of the invention as summarized in the attached claims.

In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

In particular, combinations of specific features of various aspects of the invention may be made. An aspect of the invention may be further advantageously enhanced by adding a feature that was described in relation to another aspect of the invention.
It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. A method (10) for identifying a device category of a network device (42), the method comprising:
- sending (11) an HTTP and/or HTTPS request (41) to the network device;
- receiving (12) a response (43) from the network device, the response including response data, the response data consisting of a response status code and response headers (44);
- generating (13) a vector embedding (45) from the response data (51) using a machine learning model; and
- identifying (14) a device category (48) based on the vector embedding and further vector embeddings in a first data set (47), wherein the identifying (15) a device category based on the vector embedding and further vector embeddings in a first data set comprises identifying (21) a cluster of network devices (46) in the first data set based on the vector embedding, and retrieving (22) a device category of the identified cluster as the device category of the network device.

2. The method of claim 1, wherein the identifying (15) a device category based on the vector embedding and further vector embeddings in a first data set comprises identifying (21), in the first data set, vector embeddings with assigned device category and calculating a distance between the generated vector embeddings and each of the identified vector embeddings.

3. The method of claim 1, wherein identifying (21) a cluster of network devices in the first data set based on the vector embedding comprises calculating a distance between the vector embedding and a plurality of points in a plurality of clusters.

4. The method of any one of the preceding claims, wherein the machine learning model (30) is a neural network model that utilizes a tokenizer stage (31) and a positional embedding stage (32) to generate the vector embedding.

5. The method of claim 4, wherein the machine learning model is a transformer-based neural network model.

6. The method of any one of claims 1-5, wherein, if a response header includes a dynamic field, such as a timestamp, cookie, or session-related datum, the filtering the response headers includes one of deleting the dynamic field, replacing the dynamic field with a fixed expression, and replacing the dynamic field with a corresponding data format string.

7. A method (60) for creating a first data set for identifying a device category of a network device, the method comprising, for each network device of a plurality of network devices:
- sending (61) a plurality of HTTP and/or HTTPS requests, preferably two HTTP and/or HTTPS requests, to the network device;
- receiving (62) a corresponding plurality of response data from the network device, each response datum consisting of a response status and response headers;
- filtering (63) the response headers to remove or replace dynamic data in the response headers;
- generating (63) a vector embedding from the filtered response headers using a machine learning model; and
- adding (65) the vector embedding to the first data set,
- assigning a device category to the vector embedding,
wherein assigning a device category to the vector embedding comprises:
- identifying (66) a plurality of clusters of network devices based on the respective vector embeddings of the first data set; and
- assigning (67) a device category to one or more of the identified plurality of clusters of network devices.

8. The method of claim 7, wherein each of the plurality of HTTP and/or HTTPS requests is transmitted to the network device from a geo-location that corresponds to a geo-location of the network device.

9. The method of claim 7, wherein the clustering is performed using a K-means clustering algorithm.

10. The method of any of the preceding claims 7-9, wherein assigning the device category to a cluster comprises assigning a composite device category for network devices that fall within the same cluster but have different labels.

11. The method of any of the preceding claims 7-10 wherein assigning a device category comprises:
- providing a second data set (73) comprising device identifiers and corresponding device categories;
- cross-linking a device identifier in the first data set (47) with a device identifier in the second data set.

12. A system for identifying a device category of a network device, the system comprising:
- a scanner for sending an HTTP and/or HTTPS request to the network device and for receiving a response datum from the network device, the response datum consisting of a response status and response headers;
- a processing module configured to
- provide the response datum to a machine learning model, wherein the machine learning model is adapted to generate a vector embedding from the response datum using the machine learning model;
- identify a device category based on the vector embedding and further vector embeddings in a first data set.

13. The system of claim 12, comprising any of the additional features of one of claims 2-6.

14. A system for creating a first data set for identifying a device category of a network device configured to execute the method of any of claims 9-13.

15. Computer program product comprising program instructions, which, when executed on a system cause said system to execute the method of any one of claims 2-12.
